# EUROPEAN PATENT APPLICATION

(11) **EP 4 411 939 A1**
(43) Date of publication of application: **07.08.2024**
(21) Application number: 22876312.4
(22) Date of filing: 28.09.2022
(51) Int. Cl.: H01M 10/6235, B25F 5/00, H01M 10/613, H01M 10/643, H01M 10/6551, H01M 50/204, H01M 50/213, H01M 50/247, H01M 50/289

(54) **BATTERY PACK AND ELECTRICAL DEVICE**

(30) Priority: 29.09.2021 JP 2021159135; 16.06.2022 JP 2022096975
(71) Applicant: Koki Holdings Co., Ltd., Tokyo 108-6020 (JP)
(72) Inventor: YOSHIDA, Toshiyuki, Hitachinaka-City Ibaraki 312-8502 (JP); HANAWA, Hiroyuki, Hitachinaka-City Ibaraki 312-8502 (JP)
(74) Representative: Meissner Bolte Partnerschaft mbB
(86) International application number: PCT/JP2022/036105
(87) International publication number: WO 2023/054446

(57) **Abstract**

Provided are a battery pack and an electrical device with improved cooling properties of battery cells. A bottom case 3 has a plurality of outer fins 13 on the bottom surface thereof. The bottom case 3 has contact portions 15 on an inner surface section on the side opposite from the plurality of outer fins 13. The contact portions 15 have an arc-like curved surface shape which is curved along the outer surface of first battery cells 4 not covered by a separator 6, and the contact portions make direct surface contact with the outer surface of the first battery cells 4 to support the outer surface. Each of the outer fins 13 is a planar portion perpendicular to the left-right direction, and extends downward from the rear surface of the contact portion 15. The plurality of outer fins 13 are arranged side by side in the left-right direction.

## Description

### Technical Field

The present invention relates to a battery pack and an electrical device.

### Related Art

A battery pack that incorporates multiple battery cells and is configured to be detachable from an electrical device body is known. Patent Literature 1 listed below discloses a battery pack that has an air layer between the bottom of the case and the battery cells.

### Citation List

### Patent Literature

[Patent Literature 1] Japanese Patent Application Laid-Open No. 2014-170635

### SUMMARY OF INVENTION

### Technical Problem

Battery cells generate heat during discharge. In order to suppress deterioration of the battery cells and to suppress unexpected stoppage due to the temperature protection function, it is desirable to suppress the temperature rise of the battery cells.

An object of the present invention is to provide a battery pack and an electrical device in which cooling properties of battery cells are improved.

### Solution to Problem

An aspect of the present invention is a battery pack. The battery pack includes multiple battery cells, a separator that supports the battery cells and a case that accommodates the battery cells and the separator. The separator is configured to cover upper portions of the battery cells and expose lower portions of the battery cells, and multiple outer fins are formed on a part of an outer surface of the case, or an inner surface portion having a shape that follows shapes of side surfaces of the battery cells is formed on an inner surface on a side opposite to the part of the case where the outer fins are formed and facing exposed portions of the battery cells.

Another aspect of the present invention is a battery pack. The battery pack includes multiple battery cells, a separator that supports the battery cells and a case that accommodates the battery cells and the separator. The separator is configured to cover upper portions of the battery cells and expose lower portions of the battery cells, and the case has an inner surface portion that makes surface contact with side surfaces of the battery cells exposed from the separator.

Another aspect of the present invention is a battery pack. The battery pack includes multiple battery cells that includes a first battery cell and a second battery cell, a separator that supports the battery cells and a case that accommodates the battery cells and the separator. The separator is configured to cover upper portions of the battery cells and expose lower portions of the battery cells. The case includes an inner surface having multiple inner fins facing the second battery cell and extending in a direction intersecting a length direction of the second battery cell or extending in parallel to the length direction, and an outer surface having an outer surface portion located on a side opposite to the inner fins and multiple outer fins located on a side opposite to the inner surface portion.

Another aspect of the present invention is an electrical device. The electrical device includes the battery pack and an electrical device body that has a battery pack mounting portion for mounting the battery pack.

The "electrical device" of the present invention may be expressed as a "working machine", a "power tool", etc., and such expressions are also effective as aspects of the present invention.

### Effects of Invention

The present invention may provide a battery pack and an electrical device in which cooling properties of battery cells are improved.

### BRIEF DESCRIPTION OF DRAWINGS

FIG. 1 is a left side view of an electrical device 1 according to a first embodiment of the present invention.
FIG. 2 is a plan view of a battery pack 10 of FIG. 1.
FIG. 3 is a cross-sectional view taken along a line III-III in FIG. 2.
FIG. 4 is a perspective view of the battery pack 10.
FIG. 5 is a bottom view of the battery pack 10.
FIG. 6(A) is a bottom perspective view of the battery pack 10 with an upper case 2 and a lower case 3 separated, and FIG. 6(B) is a top perspective view of the same.
FIG. 7 is a plan view of the lower case 3.
FIG. 8 is a cross-sectional view taken along a line VIII-VIII in FIG. 7.
FIG. 9 is a plan view of a lower case 3A of a battery pack according to a second embodiment of the present invention.
FIG. 10 is a bottom perspective view of the lower case 3A.
FIG. 11 is a top perspective view of the lower case 3A.
FIG. 12 is a plan view of a lower case 3B of a battery pack according to a third embodiment of the present invention.
FIG. 13 is a bottom perspective view of the lower case 3B.
FIG. 14 is a top perspective view of the lower case 3B.
FIG. 15 is a plan view of a lower case 3C of a battery pack according to a fourth embodiment of the present invention.
FIG. 16 is a cross-sectional view taken along a line XVI-XVI in FIG. 15.
FIG. 17 is a bottom view of the lower case 3C.

### DESCRIPTION OF EMBODIMENTS

Hereinafter, the same or equivalent constituent elements, members, etc. shown in each of drawings are denoted by the same reference numerals, and duplication of description will be omitted as appropriate. The embodiments are illustrative rather than limiting. All features and combinations thereof described in the embodiments are not necessarily essential to the invention.

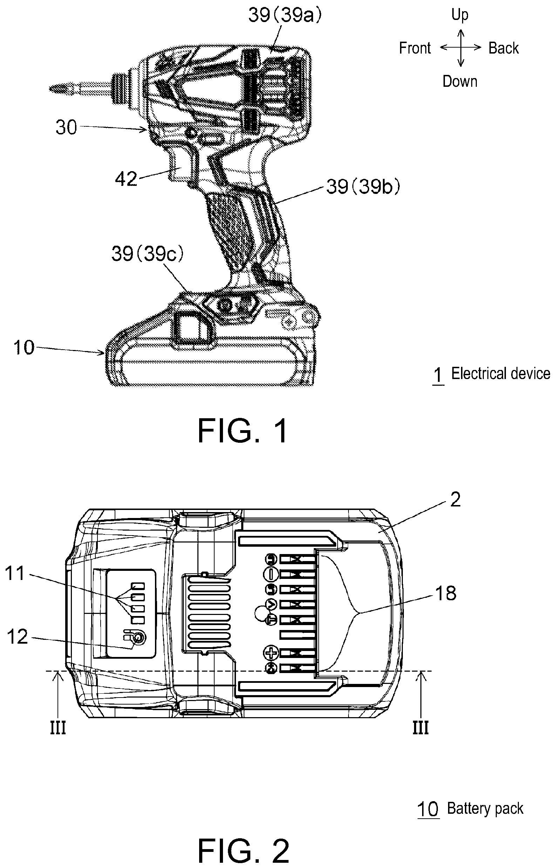

(First embodiment) FIGS. 1 to 8 relate to an electrical device 1 and a battery pack 10 according to a first embodiment of the present invention. FIG. 1 defines a front-back direction and an up-down direction of the electric device 1 that are orthogonal to each other. Further, a direction perpendicular to the front-back direction and the up-down direction is defined as a left-right direction.

The electrical device 1 is an impact driver. The electrical device 1 has a battery pack 10 and an electrical device body portion 30. The electrical device body portion 30 has a housing 39. The housing 39 includes a body portion 39a, a handle portion 39b and a battery pack mounting portion 39c.

The body portion 39a is a cylindrical portion of which a central axis is parallel to the front-back direction. The body portion 39a accommodates a motor, a rotary striking mechanism, and the like not shown. The motor is an example of a drive portion driven by the power of the battery pack 10. The handle portion 39b extends downward from an intermediate portion of the body portion 39a. The electrical device body portion 30 has a trigger switch 42 as a main switch at the upper end portion of the handle portion 39b. The trigger switch 42 is operated by a user to instruct starting and stopping of the motor.

The battery pack mounting portion 39c is provided at the lower end portion of the handle portion 39b. The battery pack 10 may be detachably attached to the battery pack mounting portion 39c by being slid from the front. The battery pack 10 has a display portion 11 and an operation portion 12 on a front upper surface. The battery pack 10 has a terminal portion 18 for electrical connection with the electrical device body portion 30 on an upper surface portion.

The battery pack 10 has an upper case 2 and a lower case 3 made of, for example, a resin molded body. The upper case 2 and the lower case 3 are combined and integrated with each other by screws or the like to constitute a case. Drain holes 9 are opened at each of the four corners of the bottom surface of the lower case 3. The battery pack 10 has two first battery cells 4 and three second battery cells 5 as multiple battery cells. The first battery cell 4 and the second battery cell 5 are battery cells of the same type, shape and size with each other, but differ from each other in support manners by the lower case 3 as described later.

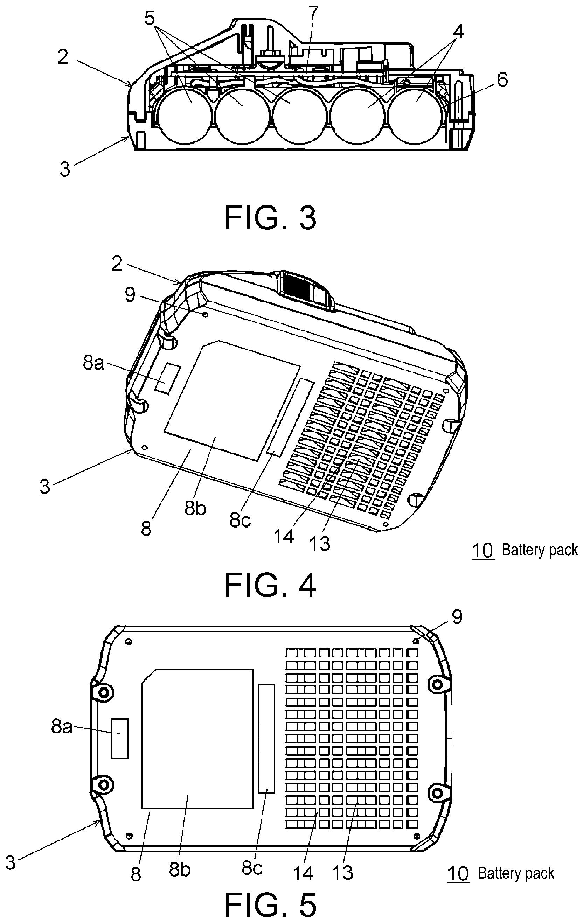

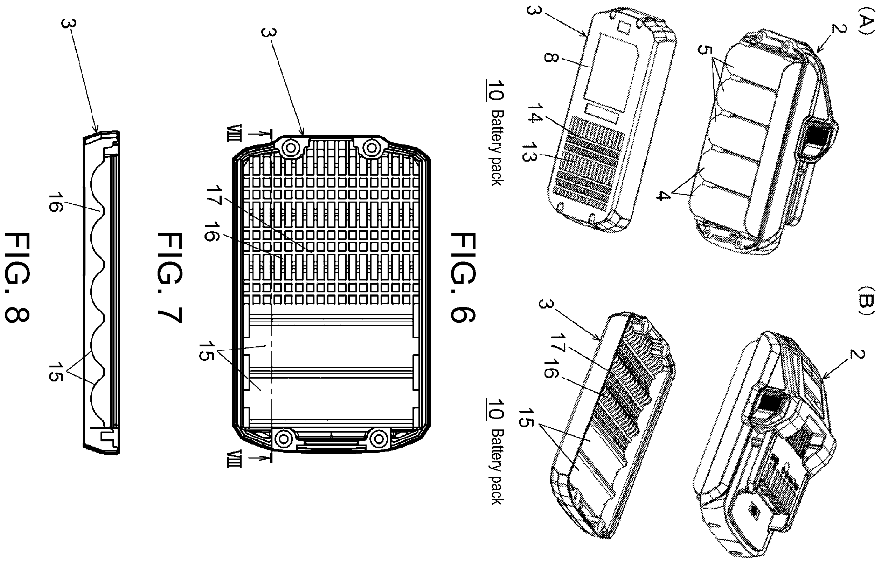

As shown in FIGS. 3 and 6, the first battery cell 4 and the second battery cell 5 are cylindrical shapes and arranged in a row in the front-back direction with a length direction parallel to the left-right direction. The battery pack 10 has a separator 6 that supports the first battery cells 4 and the second battery cells 5. The separator 6 is, for example, a resin molded body, and is configured to cover the upper half (upper portion) of each of the first battery cell 4 and the second battery cell 5 and expose the lower portion of each of the first battery cells 4 and the second battery cells 5. The separator 6 supports a substrate 7 above itself. The terminal portion 18 is provided on the substrate 7. The first battery cells 4, the second battery cells 5, the separator 6 and the substrate 7 are accommodated in a case that combines the upper case 2 and the lower case 3.

The lower case 3 has multiple outer fins 13 and multiple outer connecting portions 14 on the bottom surface constituting the outer surface. The lower case 3 has contact portions 15 (inner surface portions) on an inner surface portion on a side opposite to the outer fins 13 and the outer connecting portions 14. The contact portions 15 have arc-like curved surface shapes (cylindrical inner surface shapes) which are curved along outer surfaces (exposed portions) that are the outer surfaces (side surfaces) of the first battery cells 4 and are not covered by the separator 6, make direct surface contact with the outer surfaces of the first battery cells 4 and support the outer surfaces. The formation range of the contact portions 15 extends over the entire inner surface facing upward of the lower case 3 in the left-right direction.

Each of the outer fins 13 is a planar portion (rib) that is perpendicular to the left-right direction and extends in the front-back direction, and extends downward from the back surface of the contact portion 15. The front-back direction is an example of a direction intersecting the length direction of the first battery cell 4 and the second battery cell 5. The outer fins 13 are arranged side by side in the left-right direction. Each of the outer connecting portions 14 is provided on the back surface of the contact portion 15, extends in the left-right direction and connects the outer fins 13. The entire tips (lower ends) of the outer fins 13 and the outer connecting portions 14 are at the same height as the most bottom surface of the lower case 3, and when the battery pack 10 is placed on a flat surface such as a floor, the entire battery pack 10 contacts the flat surface.

The lower case 3 has multiple inner fins 16 and multiple inner connecting portions 17 on the inner surface facing upward. The outer surface portion of the lower case 3 on a side opposite to the inner fins 16 and the inner connecting portions 17 is a plane portion 8. The plane portion 8 includes a material display portion 8a which is slightly recessed compared to other portions, a nameplate attachment surface 8b and a production lot stamp portion 8c. When the battery pack 10 is placed on a flat surface such as a floor, the entire portion of the plane portion 8 excluding the material display portion 8a, the nameplate attachment surface 8b and the production lot stamp portion 8c makes surface contact with the flat surface.

Each of the inner fins 16 is a planar portion (rib) that is perpendicular to the left-right direction and extends in the front-back direction, and extends upward from the back surface of the plane portion 8. The inner fins 16 are arranged side by side in the left-right direction. The range in which the inner fins 16 are arranged side by side extends over the entire inner surface facing upward of the lower case 3 in the left-right direction. The tips (upper ends) of the inner fins 16 have arc-like curved surface shapes (cylindrical inner surface shapes) which are curved along the outer surfaces (exposed portions) that are the outer surfaces (side surfaces) of the second battery cells 5 and are not covered by the separator 6, make direct surface contact with the outer surfaces of the second battery cells 5 and support the outer surfaces. Each of the inner connecting portions 17 is provided on the back surface of the plane portion 8, extends in the left-right direction and connects the inner fins 16.

According to the embodiment, the following effects may be obtained.
(1) Since the outer fins 13 are formed on the outer surface (bottom surface) of the lower case 3, the surface area of the lower case 3 that makes contact with the outside air is increased, and the cooling properties of the first battery cell 4 and the second battery cell 5 may be improved. Alternatively, if the battery cell 5 is configured to make direct contact with the inner fins 16, the heat of the battery cell 5 is easily radiated to the outside via the inner fins 16 and the cooling properties of the second battery cell 5 may be improved.
(2) The contact portion 15 along the outer surface of the first battery cell 4 is formed on the inner surface (surface facing upward) of the lower case 3, and the exposed portion of the first battery cell 4 not covered by the separator 6 makes direct contact with the contact portion 15. Therefore, the heat of the first battery cell 4 is easily transmitted to the contact portion 15, the heat of the first battery cell 4 is easily radiated to the outside via the contact portion 15 and the cooling properties of the first battery cell 4 may be improved. Here, since the contact of the exposed portion of the first battery cell 4 and the contact portion 15 are surface contact, heat may be efficiently transferred from the first battery cell 4 to the contact portion 15 and the cooling properties of the first battery cell 4 may be effectively improved.
(3) Since the lower case 3 has a shape having the outer fins 13 on the back surface of the contact portion 15, the risk of molding defects (sink marks) may be reduced. That is, if the back surface of the contact portion 15 is made to be the same flat surface as the plane portion 8, the lower case 3 becomes thick at the mountain portion of the contact portion 15, and molding defects in which the bottom surface of the lower case 3 is inadvertently dented become likely to occur. In contrast, in the present embodiment, by providing the outer fins 13 on the back surface of the contact portion 15, the lower case 3 is designed without a thick portion, and the risk of molding defects (sink marks) may be reduced.
(4) The inner fins 16 of which tips are along the outer surface of the second battery cell 5 are formed on the inner surface (surface facing upward) of the lower case 3, and the exposed portion not covered by the separator 6 of the second battery cell 5 makes direct contact with the inner fins 16. Therefore, the heat of the second battery cell 5 is easily transferred to the inner fins 16, the heat of the second battery cell 5 is easily radiated to the outside via the inner fins 16 and the cooling properties of the second battery cell 5 may be improved. Here, since the contact of the exposed portion of the second battery cell 5 and the tips of the inner fins 16 are surface contact, heat may be efficiently transferred from the second battery cell 5 to the inner fins 16 and the cooling properties of the second battery cell 5 may be effectively improved.
(5) Since the portion of the outer surface (bottom surface) of the lower case 3 on a side opposite to the inner fins 16 is the plane portion 8, the plane portion 8 may be used to display materials, attach a name plate, stamp a production lot, etc., thereby increasing convenience.
(6) Since the lower case 3 has a shape having the inner fins 16 on the back surface of the plane portion 8, the risk of molding defects (sink marks) may be reduced. That is, when the back surface of the plane portion 8 is a curved surface similar to the contact portion 15, the lower case 3 becomes thick at the mountain portion of the curved surface, and molding defects in which the bottom surface of the lower case 3 is inadvertently dented become likely to occur. In contrast, in the present embodiment, by providing the inner fins 16 on the back surface of the plane portion 8, the lower case 3 is designed without a thick portion, and the risk of molding defects (sink marks) may be reduced.
(7) Since the outer connecting portions 14 connect the outer fins 13, the structure is strengthened and durability is increased. Similarly, since the inner connecting portions 17 connect the inner fins 16, the structure is strengthened and durability is increased.
(8) The lower case 3 has the plane portion 8, the outer fins 13, the outer connecting portions 14, the contact portion 15, the inner fins 16 and the inner connecting portions 17 as a single molded body. Therefore, compared with the structure which adds components, such as a heat radiating fin, separately from the lower case 3, the increase in the number of components may be suppressed and cost may be reduced. Further, since the lower case 3 and the outer fins 13 are integrally configured, the strength of the lower case 3 can be prevented from lowering as compared to a case where the lower case 3 and the outer fins 13 are configured as separate members. In addition, since the lower case 3 and the inner fins 16 are integrally configured, the strength of the lower case 3 may be prevented from lowering as compared to a case where the lower case 3 and the inner fins 16 are configured as separate members.
(9) By improving the cooling properties of the first battery cell 4 and the second battery cell 5, deterioration of the first battery cell 4 and the second battery cell 5 due to heat generation during discharge may be suppressed, and unexpected stoppage of the electrical device 1 may be suppressed with the temperature protection function, thereby increasing convenience. Furthermore, since heat generation during charging may be suppressed, air holes need not be provided in the case to allow cooling air to pass through during charging, and waterproofness may also be improved.

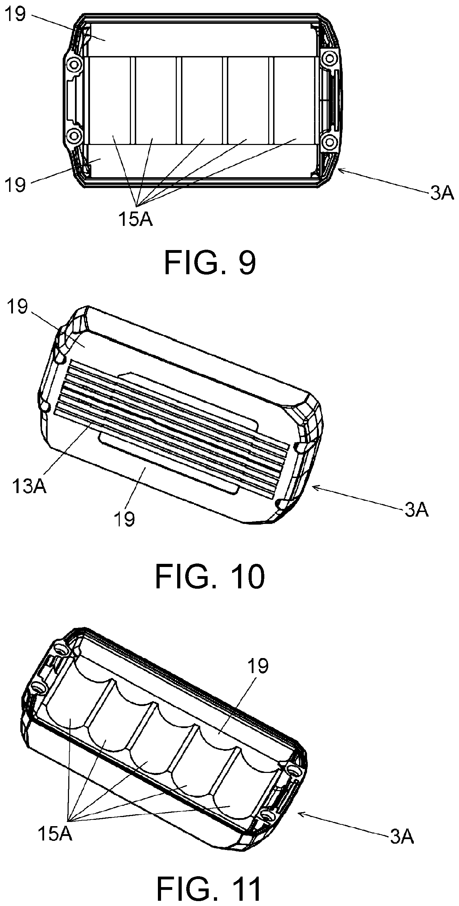

(Second embodiment) FIGS. 9 to 11 relate to a second embodiment of the present invention. In the embodiment, the lower case 3 of the battery pack 10 of the first embodiment is replaced with a lower case 3A. In the embodiment, the support manners of the first battery cell 4 and the second battery cell 5 are the same as each other.

The lower case 3A has multiple outer fins 13A on the bottom surface constituting the outer surface. The lower case 3A has contact portions 15A on the inner surface portion on a side opposite to the outer fins 13A. The contact portions 15A have arc-like curved surface shapes (cylindrical inner surface shapes) which are curved along the outer surfaces (exposed portions) of the first battery cells 4 and the second battery cells 5 not covered by the separator 6, make direct surface contact with the outer surfaces of the first battery cells 4 and the second battery cells 5 and support the outer surfaces.

Each of the outer fins 13A is a planar portion (rib) perpendicular to the left-right direction and extends downward from the back surface of the contact portion 15A. The outer fins 13A are arranged side by side in the left-right direction. The entire tips (lower ends) of the outer fins 13A are at the same height as the most bottom surface of the lower case 3, and when placed on a flat surface such as a floor, the entire outer fins 13A make contact with the flat surface.

The formation range of the outer fins 13A and the contact portions 15A is a part including the center portions (center portions in the length direction of the first battery cells 4 and the second battery cells 5) of the inner surface facing upward of the lower case 3A in the left-right direction (length direction of the first battery cell 4 and the second battery cell 5). The bottom surface portion of the lower case 3A has flat plate portions 19 (both end portions in the left-right direction) excluding the contact portions 15A.

According to the embodiment, the outer fins 13A and the contact portions 15A act in the same manner as the outer fins 13 and the contact portions 15 of the first embodiment, and the cooling properties of the first battery cell 4 and the second battery cell 5 may be improved. Further, the risk of molding defects (sink marks) of the lower case 3A may be reduced.

In the embodiment, although the formation range of the outer fins 13A and the contact portions 15A is limited to a part of the lower case 3A in the left-right direction, since the center portions in the length direction where the first battery cells 4 and the second battery cells 5 generate relatively more heat make surface contact with the contact portions 15A, the cooling properties of the first battery cell 4 and the second battery cell 5 may be effectively ensured. In addition, since the formation range of the outer fins 13A and the contact portions 15A is limited to a part in the left-right direction, resulting in a configuration having the flat plate portions 19, and using the bottom surface of the flat plate portions 19 to display materials, attach a name plate, stamp a production lot, etc. becomes possible. In this regard, a configuration may be adopted in which the flat plate portions 19 are eliminated, the formation range of the outer fins 13A and the contact portions 15A is expanded to cover the entire lower case 3A in the left-right direction and priority is given to improving the cooling properties of the first battery cell 4 and the second battery cell 5.

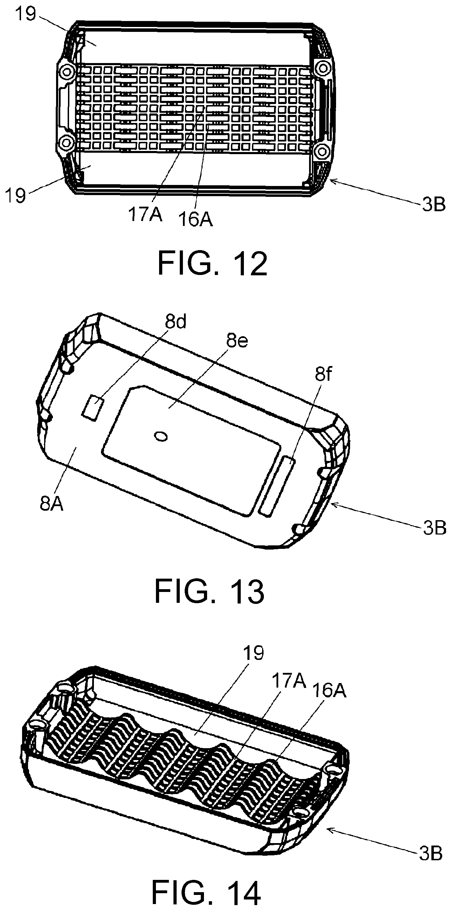

(Third embodiment) FIGS. 12 to 14 relate to a third embodiment of the present invention. In the embodiment, the lower case 3 of the battery pack 10 of the first embodiment is replaced with a lower case 3B. In the embodiment, the support manners of the first battery cell 4 and the second battery cell 5 are the same as each other.

The lower case 3B has multiple inner fins 16A and multiple inner connecting portions 17A on the inner surface facing upward. The bottom surface of the lower case 3B is entirely a plane portion 8A. The plane portion 8A includes a material display portion 8d which is slightly recessed compared to other portions, a nameplate attachment surface 8e and a production lot stamp portion 8f. When the plane portion 8A is placed on a flat surface such as a floor, the entire portion of the plane portion 8A excluding the material display portion 8d, the nameplate attachment surface 8e and the production lot stamp portion 8f makes surface contact with the flat surface.

Each of the inner fins 16A is a planar portion (rib) perpendicular to the left-right direction and extends upward from the back surface of the plane portion 8A. The inner fins 16A are arranged side by side in the left-right direction. The tips (upper ends) of the inner fins 16A have arc-like curved surface shapes (cylindrical inner surface shapes) which are curved along the outer surfaces of the first battery cells 4 and the second battery cells 5 not covered by the separator 6 (exposed portions), make direct surface contact with the outer surfaces of the first battery cells 4 and the second battery cells 5 and support the outer surfaces. Each of the inner connecting portions 17A is provided on the back surface of the plane portion 8A, extends in the left-right direction and connects the inner fins 16A.

The formation range of the inner fins 16A and the inner connecting portions 17A is a part including the center portions (center portions in the length direction of the first battery cells 4 and the second battery cells 5) of the inner surface facing upward of the lower case 3B in the left-right direction (length direction of the first battery cell 4 and the second battery cell 5). The bottom surface portion of the lower case 3B is the flat plate portions 19 at portions (both ends in the left-right direction) excluding the formation range of the inner fins 16A and the inner connecting portions 17A.

According to the embodiment, the inner fins 16A act in the same manner as the inner fins 16 of the first embodiment, and the cooling properties of the first battery cell 4 and the second battery cell 5 may be improved. Also, the risk of molding defects (sink marks) of the lower case 3B may be reduced. Further, since the bottom surface of the lower case 3B is entirely a plane portion 8A, displaying materials, attaching a name plate, stamping a production lot, etc. is convenient.

In the embodiment, although the formation range of the inner fins 16A and the inner connecting portions 17A is limited to a part of the lower case 3B in the left-right direction, since the center portions in the length direction where the first battery cells 4 and the second battery cells 5 generate relatively more heat make surface contact with the tips of the inner fins 16A, the cooling properties of the first battery cell 4 and the second battery cell 5 may be effectively ensured. In this regard, a configuration may be adopted in which the formation range of the inner fins 16A and the inner connecting portions 17A is expanded to cover the entire lower case 3B in the left-right direction, and the cooling properties of the first battery cell 4 and the second battery cell 5 are further improved.

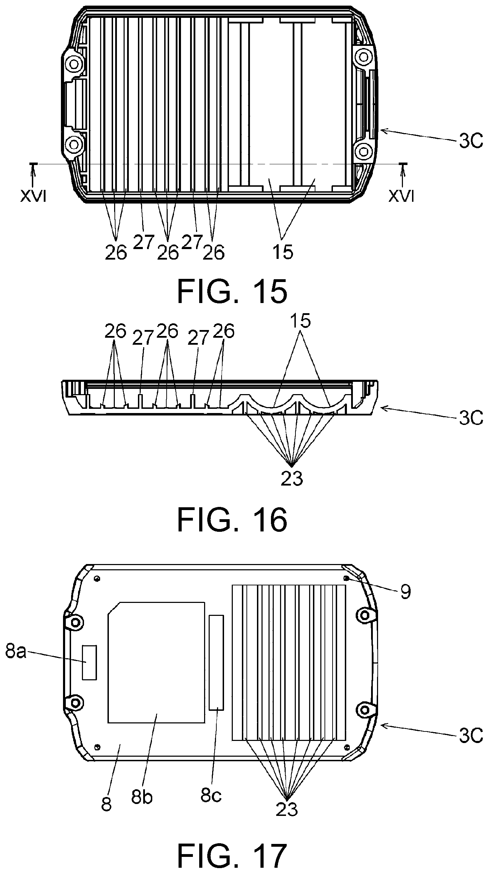

(Fourth embodiment) FIGS. 15 to 17 relate to a fourth embodiment of the present invention. In the embodiment, the lower case 3 of the battery pack 10 of the first embodiment is replaced with a lower case 3C.

The lower case 3C has multiple outer fins 23 on the bottom surface constituting the outer surface. The lower case 3C has the contact portions 15 on the inner surface portion on a side opposite to the outer fins 23.

Each of the outer fins 23 is a planar portion (rib) that is perpendicular to the front-back direction and extends in the left-right direction (length direction of the battery cell), and extends downward from the back surface of the contact portion 15. The outer fins 23 are arranged side by side in the front-back direction. The entire tips (lower ends) of the outer fins 23 are at the same height as the most bottom surface of the lower case 3C, and when placed on a flat surface such as a floor, the entire outer fins 23 make contact with the flat surface.

The lower case 3C has multiple inner fins 26 and multiple partition ribs 27 on the inner surface facing upward. The outer surface portion of the lower case 3C on a side opposite to the inner fins 26 and the partition ribs 27 is the plane portion 8.

Each of the inner fins 26 and each of the partition ribs 27 are planar portions (ribs) that are perpendicular to the front-back direction and extend in the left-right direction (length direction of the battery cell), and extend upward from the back surface of the plane portion 8. The inner fins 26 and the partition ribs 27 are arranged side by side in the front-back direction. The tips (upper ends) of the inner fins 26 have arc-like curved surface shapes (cylindrical inner surface shapes) which are curved along the outer surfaces (exposed portions) that are the outer surfaces of the second battery cells 5 and are not covered by the separator 6, make direct surface contact with the outer surfaces of the second battery cells 5 and support the outer surfaces. Each of the partition ribs 27 partitions between adjacent second battery cells 5. It should be noted that the partition ribs 27 may also make direct surface contact with the exposed portions of the second battery cells 5 in the same manner as the inner fins 26.

According to the embodiment, the outer fins 23 and the contact portions 15 act in the same manner as the outer fins 13 and the contact portions 15 of the first embodiment, the inner fins 26 act in the same manner as the inner fins 16 of the first embodiment and the cooling properties of the first battery cell 4 and the second battery cell 5 may be improved. Also, the risk of molding defects (sink marks) of the lower case 3C may be reduced.

In the embodiment, outer connecting portions extending in the front-back direction and connecting the outer fins 23 may be provided. Also, inner connecting portions extending in the front-back direction and connecting the inner fins 26 may be provided. In addition, the formation range of the outer fins 23 and/or the inner fins 26 is a part of the lower case 3C in the left-right direction, and may preferably be limited to a part including the center portions in the length direction of the first battery cell 4 and the second battery cell 5.

The outer fins 23 and/or the inner fins 26 may be divided into multiple parts in the extending direction in the left-right direction (length direction of the battery cell). That is, the outer fins 23 and/or the inner fins 26 may be multiple short fins extending in the left-right direction and arranged side by side in the left-right direction.

The outer fins 23 may be replaced with the outer fins 13 of the first embodiment. Alternatively, the inner fins 26 may be replaced with the inner fins 16 of the first embodiment.

Although the present invention has been described above by using the embodiments as examples, those skilled in the art will understand that various modifications can be made to each component and each processing process of the embodiments within the scope of the claims. A modified example will be discussed below.

The lengths and extending directions of the outer fins and the inner fins may be combined arbitrarily. For example, one of the outer fins and the inner fins may extend in the left-right direction (length direction of the battery cell), and the other may extend in the front-back direction (direction in which the battery cells are arranged). Further, one or both of the outer fins and the inner fins may be divided into multiple parts in the extending direction.

The number of battery cells and the like exemplified as specific numerical values in the embodiments do not limit the scope of the invention in any way, and can be arbitrarily changed according to required specifications. The electrical device of the present invention may be any type of device that operates by using power from a battery pack, and may be a power tool or a work machine other than an impact driver, or may be an electrical device other than a power tool or a work machine.

### Reference Signs List

1: electrical device
2: upper case
3, 3A, 3B, 3C: lower case
4: first battery cell
5: second battery cell
6: separator
7: substrate
8: plane portion
8a: material display portion
8b: nameplate attachment surface
8c: production lot stamp portion
8d: material display portion
8e: nameplate attachment surface
8f: production lot stamp portion
9: drain hole
10: battery pack
11: display portion
12: operation portion (remaining amount display switch)
13, 13A: outer fin
14: outer connecting portion
15, 15A: contact portion
16, 16A: inner fin
17, 17A: inner connecting portion
18: terminal portion
19: flat plate portion
23: outer fin
26: inner fin
27: partition rib
30: electrical device body portion
39: housing
39a: body portion
39b: handle portion
39c: battery pack mounting portion
42: trigger switch (main switch)

## Claims

1. A battery pack, comprising:
a plurality of battery cells;
a separator, supporting the plurality of battery cells; and
a case, accommodating the plurality of battery cells and the separator, wherein
the separator is configured to cover upper portions of the plurality of battery cells and expose lower portions of the plurality of battery cells,
a plurality of outer fins are formed on a part of an outer surface of the case, or a plurality of inner fins are formed on a part of an inner side of the case, and
an inner surface portion having a shape that follows shapes of side surfaces of the plurality of battery cells is formed on an inner surface on a side opposite to the part of the case where the plurality of outer fins are formed and facing exposed portions of the plurality of battery cells.

2. The battery pack according to claim 1, wherein
the plurality of battery cells comprise a first battery cell, and
a contact portion that contacts a side surface of the first battery cell along the side surface of the first battery cell is formed on the inner surface portion.

3. The battery pack according to claim 2, wherein
the plurality of battery cells comprise a second battery cell different from the first battery cell,
the plurality of inner fins having tips along a side surface of the second battery cell are formed on an inner surface of the case on a side opposite to the outer surface where the plurality of outer fins are not provided, and
the plurality of inner fins support an exposed portion of the second battery cell that is not covered by the separator.

4. The battery pack according to claim 3, wherein
at least one of the plurality of outer fins and the plurality of inner fins is configured to extend in a direction intersecting a length direction of the battery cell.

5. The battery pack according to claim 3, wherein
at least one of the plurality of outer fins and the plurality of inner fins is configured to extend in a length direction of the battery cell.

6. The battery pack according to any one of claims 1 to 5, wherein
the plurality of outer fins and the plurality of inner fins are formed in a range comprising center portions in a length direction of the plurality of battery cells in the length direction of the plurality of battery cells.

7. A battery pack, comprising:
a plurality of battery cells;
a separator, supporting the plurality of battery cells; and
a case, accommodating the plurality of battery cells and the separator, wherein
the separator is configured to cover upper portions of the plurality of battery cells and expose lower portions of the plurality of battery cells, and
the case has an inner surface portion that makes surface contact with side surfaces of the plurality of battery cells exposed from the separator.

8. The battery pack according to claim 7, wherein
the plurality of battery cells comprise a first battery cell and a second battery cell,
a contact portion that makes surface contact with a side surface of the first battery cell along the side surface of the first battery cell is formed on the inner surface portion,
a plurality of inner fins having tips along a side surface of the second battery cell are formed on an inner surface of the case, and
the plurality of inner fins support exposed portions of the plurality of battery cells that are not covered by the separator.

9. A battery pack, comprising:
a plurality of battery cells, comprising a first battery cell and a second battery cell;
a separator, supporting the plurality of battery cells; and
a case, accommodating the plurality of battery cells and the separator, wherein
the separator is configured to cover upper portions of the plurality of battery cells and expose lower portions of the plurality of battery cells, and
the case comprises
an inner surface having a plurality of inner fins facing the second battery cell and extending in a direction intersecting a length direction of the second battery cell or extending in parallel to the length direction, and an inner surface portion facing the first battery cell and parallel to a length direction of the first battery cell, and
an outer surface having an outer surface portion located on a side opposite to the plurality of inner fins and a plurality of outer fins located on a side opposite to the inner surface portion.

10. The battery pack according to claim 9, wherein
a contact portion that makes surface contact with a side surface of the first battery cell along the side surface of the first battery cell is formed on the inner surface portion, and
each of the plurality of inner fins has a shape with a tip along a side surface of the second battery cell, and supports exposed portions of the plurality of battery cells that are not covered by the separator.

11. The battery pack according to claim 9, wherein
the plurality of outer fins are configured to extend in a direction intersecting a length direction of the first battery cell or to extend in parallel to the length direction.

12. The battery pack according to any one of claims 8 to 11, wherein
the inner fin is formed in a range comprising center portions in a length direction of the plurality of battery cells in the length direction of the plurality of battery cells.

13. The battery pack according to any one of claims 1 to 5 and 8 to 11, wherein
a portion of an outer surface of the case on a side opposite to the plurality of inner fins is a flat surface.

14. The battery pack according to any one of claims 1 to 5 and 8 to 11, wherein
each of the plurality of battery cells has a cylindrical shape, and
tips of the plurality of inner fins are formed in arc-like shapes along the cylindrical shape.

15. An electrical device, comprising:
the battery pack according to any one of claims 1 to 5 and 7 to 11; and
an electrical device body having a battery pack mounting portion for mounting the battery pack.
